# EUROPÄISCHE PATENTANMELDUNG

(11) **EP 4 751 856 A1**
(43) Veröffentlichungstag der Anmeldung: **03.06.2026**
(21) Anmeldenummer: 25218983.2
(22) Anmeldetag: 27.11.2025
(51) Int. Cl.: B25J 5/00, B25J 9/00, B25J 9/16

(54) **ROBOTERSYSTEM UND VERFAHREN ZUR AUSFÜHRUNG EINER ARBEITSAUFGABE**

(30) Priorität: 27.11.2024 DE 102024134989
(71) Anmelder: Airbus Operations GmbH, 21129 Hamburg (DE)
(72) Erfinder: GOEHLICH, Robert Alexander, 21129 Hamburg (DE)
(74) Vertreter: LKGLOBAL Partnerschaftsgesellschaft mbB

(57) **Zusammenfassung**

Es werden ein Robotersystem (1) mit wenigstens einem Roboter (2) und wenigstens zwei Roboterarmen (5) sowie ein Verfahren zur Ausführung einer Arbeitsaufgabe mit einem Robotersystem (1) mit wenigstens einem Roboter (2) und wenigstens zwei Roboterarmen (5) vorgeschlagen, die dazu eingerichtet sind, mit wenigstens einem Endeffektor (6) eine Arbeitsaufgabe auszuführen, wobei ein adaptives Sockelmodul (4) an einem Untersatz (3) des wenigstens einen Roboters (2) dazu eingerichtet ist, die wenigstens zwei Roboterarme (5) an ihrer jeweiligen Basis (9a) zu halten und wenigstens zwei verschiedene an die jeweilige Arbeitsaufgabe angepasste Betriebszustände (A, B, C, D) anzunehmen.

## Beschreibung

### Technisches Gebiet

Die vorliegende Offenbarung betrifft den Einsatz von Robotersystemen für technische Arbeitsaufgaben. Insbesondere betrifft die vorliegende Offenbarung ein Robotersystem mit wenigstens einem Roboter und wenigstens zwei Roboterarmen, sowie ein Verfahren zur Ausführung einer Arbeitsaufgabe mit einem Robotersystem mit wenigstens einem Roboter und wenigstens zwei Roboterarmen.

### Technischer Hintergrund

Robotersysteme mit Robotern sind aus dem Stand der Technik bekannt. Die Roboter können mit stationären oder fahrbaren Untersätzen versehen sein und automatisiert und/oder ferngesteuert Arbeitsaufgaben erfüllen. Roboter mit fahrbaren Untersätzen bzw. -wägen werden auch als unbemannte robotische Fahrzeuge *(unmanned robotic vehicles -* URV) bezeichnet und können als solche autonom und/oder ferngesteuert manövrieren, womit sie keine Bedienperson bzw. Fahrzeugführer mit sich führen. URVs können auf Grundlage vorgegebener oder selbst erzeugter Bewegungsbahnen navigieren und sich dabei fahrend, fliegend und/oder schwimmend fortbewegen.

Roboter können verschiedenartigste ihnen zugewiesene Aufgaben erledigen. Der Einsatz von Robotern ist insbesondere dort von Vorteil, wo Arbeitsaufgaben hoch repetitive und/oder präzise Arbeitsabläufe erfordern, die von Menschenhand nicht sinnvoll reproduzierbar sind. Auch können Roboter insbesondere dort hilfreich sein, wo Arbeitsabläufe relativ lange zusammenhängende Arbeitszeiten erfordern, die von Menschenhand nicht ohne Weiteres zu gewährleisten sind.

EP 3 135 442 B1 bezieht sich auf ein Robotersystem zur Durchführung einer Vielzahl von Vorgängen während der Montage oder Wartung eines Flugzeugs oder Raumfahrzeugs. Das System umfasst einen ersten Roboter, der einen Basisteil, einen beweglichen Roboterarm mit einem ersten Kupplungsteil und ein erstes Steuerungsmittel umfasst, das zur Steuerung des Roboterarms ausgelegt ist. Das System umfasst außerdem eine Vielzahl von zweiten Robotern, die Folgendes umfassen: Bewegungsmittel, einen Antriebsteil, der zum Antrieb der Bewegungsmittel betätigt werden kann, einen Werkzeugteil, der ein Werkzeug umfasst, das zur Ausführung eines bestimmten der Arbeitsgänge auszuführen, einen zweiten Kupplungsteil, der so ausgelegt ist, dass er selektiv und lösbar mit dem ersten Kupplungsteil in einer vorbestimmten Positionsbeziehung gekuppelt werden kann, und eine zweite Steuereinrichtung die so ausgelegt ist, dass sie den jeweiligen zweiten Roboter steuert. Die ersten und zweiten Steuermittel sind so ausgelegt, dass sie den Antriebsteil eines der zweiten Roboter und den Roboterarm steuern, um den ersten Kupplungsteil und den jeweiligen zweiten Kupplungsteil in der vorbestimmten Positionsbeziehung zu koppeln, anschließend den Roboterarm, um den Werkzeugabschnitt zusammen mit dem zweiten Roboter, der vom Roboterarm gehalten wird, zu einem ausgewählten Ort bewegt, an dem der spezifische Vorgang, für den der Werkzeugabschnitt des jeweiligen zweiten Roboters ausgelegt ist, ausgeführt werden soll, und dann der zweite Roboter den spezifischen Vorgang am ausgewählten Ort ausführt.

EP 2 908 038 B1 betrifft ein Verfahren zur Anbringung einer Anordnung zur Befestigung eines Systems an einer Struktur zumindest teilweise, wobei ein erstes Element der Anordnung mit der Struktur verbunden wird, wobei das erste Element durch Einspritzen von mindestens einem Material in eine von einem Robotersystem an eine Zielposition der Anordnung auf der Struktur getragene Form erzeugt wird, die durch Anpressen an die Struktur einseitig verschlossen wird, und nach dem Aushärten des ersten Elements ein zweites Element der Anordnung direkt oder indirekt mit dem ersten Element gekoppelt wird, sowie ein Robotersystem zur Durchführung eines solchen Verfahrens.

DE 10 2015 216272 A1 betrifft einen modularisierten Roboter mit einer Roboter-Plattform, die dazu ausgebildet ist, Mobilität und Konnektivität externer Komponenten an den modularisierten Roboter zu übertragen, mit einem Roboter-Arbeitskopf, der dazu ausgebildet ist, die Fähigkeit zur Durchführung einer betrieblichen Aufgabe an den modularisierten Roboter zu übertragen, und mit einem Roboter-Adapter, der entweder an der Roboter-Plattform oder dem Roboter-Arbeitskopf angebracht und dazu ausgebildet ist, die Roboter-Plattform mit dem Roboter-Arbeitskopf mechanisch zu verlinken. Weiterhin umfassen ein Schwarm von modularisierten Robotern und ein Robotersystem solche modularisierten Roboter.

DE 42 08 478 A1 beschreibt ein Passagier-Versorgungssystem mit im Unterbodenbereich eines Flugzeuges über eine Bodenzufuhr verladbaren Catering-Containern mit Versorgungsbehältern in Einheitsabmessungen, wobei ein Robotersystem Verpackungen aus den Catering-Containern entnimmt und in eine Verteilerstation transportiert.

Xu R, Qian L and Zhao X, "Development of dual-arm mobile robot platform based on ROS" [version 1; peer review: 2 approved], cobot 2022, 1:4 (https://doi.org/10.12688/cobot.17457.1) stellen fest, dass angesichts der zunehmenden Nachfrage nach mobilen Robotern in den Bereichen Lagerhaltung, Logistik und Dienstleistungen einfache planare Bewegungen den Anforderungen komplexer Umgebungen nur schwer gerecht werden können. Die Kombination von mobilen Robotern und kooperativen Robotern ist hilfreich, um die Geschicklichkeit der Roboterbewegung zu verbessern und die Anwendung von Robotern zu erweitern. Mit Blick auf die Anwendungsanforderungen von zweiarmigen Robotern und mobilen Robotern in der Praxis wurde in dieser Arbeit die Hardware einer Plattform entwickelt, eine Simulationsplattform auf der Basis von ROS *(Robot Operating System)* gebaut und das eigentliche Software-Kontrollsystem entwickelt. Schließlich wurde die Machbarkeit des Plattformdesigns durch das Kopplungsbewegungsexperiment der beiden Roboter überprüft.

Aus dem Stand der Technik bekannte Ansätze zur Verwendung von Robotern haben den Nachteil, dass die Roboter jeweils zur Erfüllung relativ spezialisierter Arbeitsaufgaben eingerichtet und daher unflexibel sind. Für einen Wechsel der jeweiligen Arbeitsaufgabe erforderliche Einrichtungs- und/oder Umrüstaufwände können unakzeptabel hoch sein. Selbst bei einem modularen Aufbau der Roboter bzw. einer Modularität von ihnen verwendeter Effektoren kann die Einrichtung neuer Effektoren und/oder eine Anpassung auf neue Arbeitsaufgaben unakzeptabel aufwendig sein sowie zu entsprechenden Verzögerungen bei der Einsetzbarkeit der Roboter führen.

### Beschreibung

Es kann als Aufgabe betrachtet werden, Flexibilität und Vielseitigkeit von Robotersystemen zu verbessern. Insbesondere wären Einrichtungs- und Umrüstungszeiten von Robotersystemen zu verringern. Diese Aufgabe wird durch den Gegenstand der unabhängigen Ansprüche 1 und 10 gelöst.

Insbesondere wird die Aufgabe gelöst durch ein Robotersystem mit wenigstens einem Roboter und wenigstens zwei Roboterarmen, die dazu eingerichtet sind, mit wenigstens einem Endeffektor eine Arbeitsaufgabe auszuführen, wobei ein adaptives Sockelmodul an einem Untersatz des wenigstens einen Roboters dazu eingerichtet ist, die wenigstens zwei Roboterarme an ihrer jeweiligen Basis zu halten und wenigstens zwei verschiedene an die jeweilige Arbeitsaufgabe angepasste Betriebszustände anzunehmen.

Bei einem Verfahren zur Ausführung einer Arbeitsaufgabe mit einem Robotersystem mit wenigstens einem Roboter und wenigstens zwei Roboterarmen, wird die Aufgabe dadurch gelöst, dass mit einem adaptiven Sockelmodul an einem Untersatz des wenigstens eines Roboters, das dazu eingerichtet ist, die wenigstens zwei Roboterarme an ihrer jeweiligen Basis zu halten, wenigstens zwei verschiedene an die jeweilige Arbeitsaufgabe angepasste Betriebszustände angenommen werden können.

Ein oder mehrere Endeffektoren an den wenigstens zwei Roboterarmen können jeweils die gleiche Arbeitsaufgabe oder verschiedene Arbeitsaufgaben erfüllen. Die Arbeitsaufgabe kann eine Messwert-, Bild- und/oder Abbildaufnahme (Scan, Ultraschall, Röntgen, etc.) mit dem wenigstens einen Endeffektor umfassen. Die Roboterarme können als Manipulatoren dienen und werden daher häufig als solche bezeichnet. Das Sockelmodul bzw. Manipulatorsockelmodul kann als Verbindungsstück zwischen Untersatz und Basis dienen.

Indem das Sockelmodul wenigstens zwei verschiedene Betriebszustände annehmen kann, ist es transformierbar bzw. kann zur Transformierung des Robotersystems dienen. Zur Steuerung des Robotersystems kann ein Computerprogrammprodukt mit computerlesbaren Instruktionen vorgesehen sein, die das Robotersystem dazu veranlassen, ein entsprechendes Verfahren durchzuführen. Des Weiteren kann ein computerlesbarer Datenträger bzw. ein Datenträgersignal vorgesehen sein, auf welchem ein entsprechendes Computerprogrammprodukt gespeichert und/oder übertragen ist bzw. wird.

Die vorgeschlagene Lösung bietet eine Vielzahl von Vorteilen gegenüber dem Stand der Technik. So lassen sich Flexibilität und Vielseitigkeit von Robotersystemen verbessern. Insbesondere können Einrichtungs- und Umrüstungszeiten von Robotersystemen erheblich reduziert werden. Darüber hinaus erlaubt die vorgeschlagene Lösung, die Autonomie von Robotersystemen zu verbessern, insbesondere indem Roboter sich eigenständig ein- und/oder umrüsten können.

Weitere Ausführungsformen ergeben sich aus den abhängigen Ansprüchen sowie aus der folgenden Beschreibung. Dabei in Bezug auf Verfahren beschriebene Merkmale sowie entsprechende Verfahrensschritte können als Vorrichtungsmerkmale implementiert werden oder umgekehrt. Im Zusammenhang mit dem Verfahren stehende Abschnitte der Beschreibung gelten also in analoger Weise auch für ein Robotersystem sowie Computerprogramme zu seiner Steuerung. Insbesondere können Verfahrensschritte und damit zusammenhängend erwähnte Komponenten als Funktionen des Robotersystems sowie entsprechenden Computerprogramme implementiert sein und beliebige Funktionen des Robotersystems können als Verfahrensschritte implementiert werden.

Gemäß einer Ausführungsform eines Robotersystems kann vorgesehen sein, dass in mindestens einem Betriebszustand eine zumindest teilweise bewegungssynchrone Ausführung der Arbeitsaufgabe durch die wenigstens zwei Roboterarme vorgesehen ist. Das Sockelmodul kann bei einer Synchronisierung der Bewegungen der Roboterarme behilflich sein. Somit lassen sich Arbeitseffizienz und -präzision des Robotersystems verbessern.

Gemäß einer Ausführungsform eines Robotersystems kann vorgesehen sein, dass die wenigstens zwei Roboterarme an einem Roboter und/oder an zwei verschiedenen Robotern angeordnet ist bzw. sind. So können beispielsweise bewegungssynchron arbeitende Roboterarme an einem und/oder mehreren Robotern genutzt werden. Auf diesem Wege lassen sich Arbeitseffizienz und - Präzision des Robotersystems weiter verbessern

Gemäß einer Ausführungsform eines Robotersystems kann vorgesehen sein, dass wenigstens zwei Roboter und/oder wenigstens zwei Roboterarme dazu eingerichtet sind, über eine Verbindungsvorrichtung mechanisch miteinander gekoppelt zu werden. Die Verbindungsvorrichtung kann mit dem adaptiven Sockelmodul verbunden und/oder darin integriert sein. Beispielsweise können zwei Roboterarme eines Roboters über das Sockelmodul und/oder über ein Schienensystem miteinander synchronisiert sein, um einen Endeffektor zu tragen. Alternativ oder zusätzlich können verschiedene Roboter zu einer Arbeitsgruppe zusammengeschlossen sein. Mehrere Roboter können ein Schwarm bilden. Wenigstens zwei Roboter können über jeweils wenigstens einen ihrer Roboterarme miteinander verbindbar ausgestaltet sein. Durch eine Verbindung über die am adaptiven Sockel angeordneten Roboterarme kann das adaptive Sockelmodul zur hydraulischen, pneumatischen, mechanischen, elektrischen und/oder elektronischen Ausgestaltung der Verbindung beitragen. Jeweils wenigstens ein weiterer Arm der wenigstens zwei Roboter kann zur Ausführung der Arbeitsaufgabe eingerichtet sein. Somit lassen sich Arbeitseffizienz und - präzision des Robotersystems verbessern.

Gemäß einer Ausführungsform eines Robotersystems kann vorgesehen sein, dass das Sockelmodul dazu eingerichtet ist, eine Geometrieveränderung zu vollziehen. Zur Geometrieveränderung kann das Sockelmodul wenigstens abschnittsweise teilbar, teleskopierbar und/oder klappbar ausgestaltet sein. Somit lassen sich Flexibilität und Vielseitigkeit von Robotersystemen weiter verbessern.

Gemäß einer Ausführungsform eines Robotersystems kann vorgesehen sein, dass ein Sockelelement und/oder ein Armelement wenigstens eines Roboters aus einer Arbeitsposition in eine Verbindungsposition überführbar ausgestaltet ist, wobei die Arbeitsposition zur Ausführung der Arbeitsaufgabe und die Verbindungsposition zur Herstellung einer Verbindung mit einem weiteren Roboter vorgesehen ist. Auf diesem Wege können die Roboterarme aber wahlweise zur Erfüllung von Arbeitsaufgaben in der Arbeitsposition bzw. von Verbindungsaufgaben, wie einer Synchronisation, in der Verbindungsposition verwendet werden. Somit lassen sich Flexibilität und Vielseitigkeit von Robotersystemen weiter verbessern.

Gemäß einer Ausführungsform eines Robotersystems kann vorgesehen sein, dass wenigstens zwei Roboterarme jeweils an einer höhenverstellbaren Vertikalführung des Sockelmoduls gehalten sind. Beispielsweise können zwei Vertikalführungen oder Sockelelemente des Sockelelements vorgesehen sein, um jeweils ein Roboterarm zu halten. Somit lässt sich eine Arbeitsweise der Roboterarme an jeweilige Arbeitsaufgaben anpassen, was weiter dabei hilft, die Flexibilität und Vielseitigkeit von Robotersystemen zu verbessern.

Gemäß einer Ausführungsform eines Robotersystems kann vorgesehen sein, dass wenigstens zwei Roboter dazu eingerichtet sind, sich zu Erfüllung einer gemeinsamen Arbeitsaufgabe selbstständig miteinander zu synchronisieren. Beispielsweise kann einer Gruppe von Robotern eine Arbeitsaufgabe zugeteilt werden. Wenigstens zwei Roboter aus der Gruppe können sich zu Erfüllung der Arbeitsaufgabe zusammenschließen. Beispielsweise können Arbeitsaufgaben so zu gewissen außerbetrieblichen Zeiten, wie nachts oder an Wochenenden, durchgeführt werden, ohne dass dazu ein menschlicher Eingriff vonnöten wäre. Somit lassen sich Arbeitseffizienz und -präzision des Robotersystems verbessern

Gemäß einer Ausführungsform eines Robotersystems kann vorgesehen sein, dass von wenigstens zwei zu einer Arbeitsgruppe zusammengefassten Robotern ein Roboter als Arbeitsgruppenpilot dazu eingerichtet ist, die Arbeitsgruppe zu führen, während der verbleibende wenigstens eine Roboter der Arbeitsgruppe dazu eingerichtet ist, vom Arbeitsgruppenpilot geführt zu werden. Der Arbeitsgruppenpilot kann die Arbeitsgruppe anleiten. Beispielsweise kann der Arbeitsgruppenpilot als Arbeitsgruppenführer fungieren, der die Arbeitsgruppe führt. Somit lassen sich Arbeitseffizienz und -präzision sowie Flexibilität und Vielseitigkeit von Robotersystemen insbesondere bei zu Arbeitsgruppen zusammengefassten Robotern generell verbessern.

### Kurze Beschreibung der Figuren

Nachfolgend werden anhand der beigefügten Zeichnungen einige Details näher beschrieben. Die Darstellungen sind schematisch und nicht maßstabsgetreu. Gleiche Bezugszeichen beziehen sich auf gleiche oder ähnliche Elemente. Es zeigen:
- Fig. 1: eine schematische Vorderansicht eines Ausführungsbeispiels eines Robotersystems mit einem Roboter in einem ersten Betriebszustand;
- Fig. 2: eine schematische Vorderansicht eines Ausführungsbeispiels eines Robotersystems mit einem Roboter in einem weiteren Betriebszustand
- Fig. 3: eine schematische Vorderansicht eines Ausführungsbeispiels eines Robotersystems mit einem Roboter in einem zusätzlichen Betriebszustand.
- Fig. 4: eine schematische Seitenansicht eines Ausführungsbeispiels eines Robotersystems mit zwei Robotern in einem weiteren zusätzlichen Betriebszustand.
- Fig. 5: eine schematische Draufsicht eines Ausführungsbeispiels eines Robotersystems mit zwei Robotern in einem weiteren zusätzlichen Betriebszustand.

### Detaillierte Beschreibung

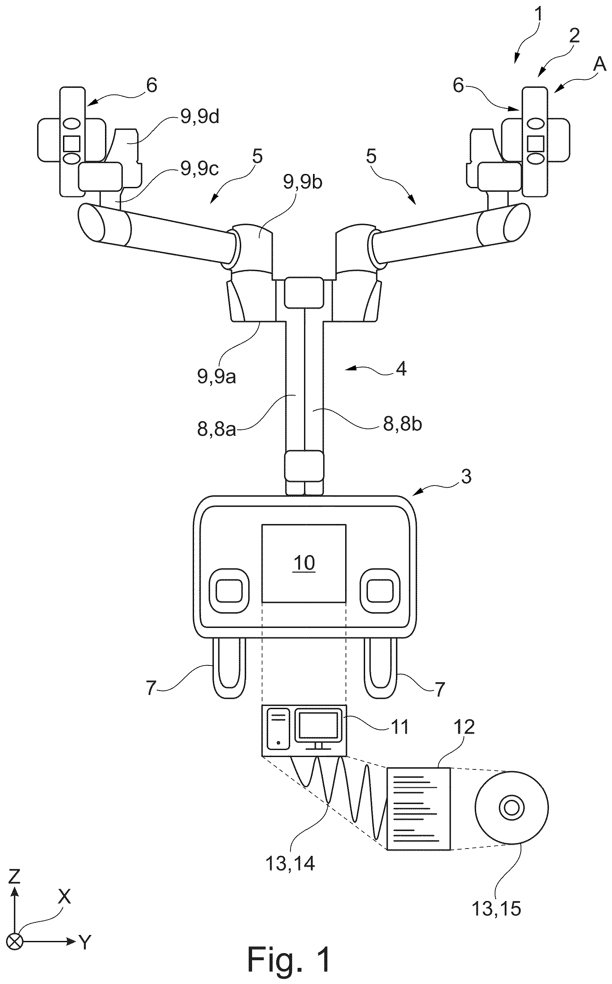

Fig. 1 zeigt eine schematische Perspektivansicht eines Robotersystems 1 mit einem Roboter 2 in einem ersten Betriebszustand A. Das Robotersystem 1 umfasst einen Untersatz 3 mit einem Sockelmodul 4, an dem zwei Roboterarme befestigt 5 sind, die jeweils einen Endeffektor 6 erhalten. Der Untersatz 3 kann Antriebseinrichtungen 7, wie beispielsweise Räder oder dergleichen, umfassen, mit deren Hilfe sich der Roboter 2 fortbewegen und beispielsweise als autonomer mobiler Roboter *(Autonomous Mobile Robot* - AMR) ausgestaltet sein kann. Das Robotersystem 1 bzw. der Roboter 2 erstreckt sich in einer Längsrichtung X, einer Querrichtung Y und einer Höhenrichtung Z, die gemeinsam ein kartesisches Koordinatensystem aufspannen.

Das Sockelmodul 4 kann Sockelelemente 8 umfassen, an denen die Roboterarme 5 gehalten sind. Die Sockelelemente 8 können Vertikalführungen 8a, 8b umfassen, wie vorliegend zwei Vertikalführungen, also einer ersten Vertikalführung 8a und einer zweiten Vertikalführung 8b. Die Vertikalführungen 8a, 8b erlauben eine vertikale Höhenverstellung der Arme 9 im Wesentlichen parallel zur Höhenrichtung Z.

Die Roboterarme 5 können eine Reihe von Armelementen 9 bzw. Abschnitten aufweisen. Die Armelemente 9 umfassen wenigstens eine am Sockelmodul 4 bzw. den Vertikalführungen 8a, 8b gehaltene Basis 9a sowie beispielsweise eine an der Basis 9a gehaltene Schulter 9b, ein an der Schulter 9b gehaltenen Ellenbogen 9c und/oder ein am Ellenbogen gehaltenes Handgelenk 9d. Am jeweiligen Endabschnitt der Roboterarme 9, der vorliegend am Handgelenk 9d angebracht sein kann, kann der Endeffektor 6 gehalten sein.

Des Weiteren kann das Robotersystem 1 bzw. der Roboter 2 ein Steuerungsmodul 10 zum Steuern des Roboters 2 umfassen, das entweder zumindest teilweise in den Roboter 2 integriert und/oder datenübertragend mit einer Datenverarbeitungseinheit 11 verbunden sein kann. Die Datenverarbeitungseinheit 11 kann dazu eingerichtet sein, ein Computerprogramm 12 zu verarbeiten, das durch die Datenverarbeitungseinheit 11 bzw. einen Computer ausführbare Instruktionen zur Durchführung eines hierin beschriebenen Verfahrens umfassen kann. Das Computerprogramm 12 kann als computerlesbarer Datenträger 13 in Form eines Datenträgersignals 14 und/oder auf einem Speichermedium 15 für die Datenverarbeitungseinheit 28 lesbar übertragen werden bzw. gespeichert sein.

Das Computerprogramm 12 kann Befehle umfassen, die bei der Ausführung des Computerprogramms durch das Steuerungsmodul 10 bzw. Datenverarbeitungseinheit 11 diese veranlassen, entsprechende Verfahren bzw. deren Schritte auszuführen. Ein entsprechender computerlesbarer Datenträger, beispielsweise in Form eines Datenträgersignals 14 und/oder eines Speichermediums 14 kann sich dadurch auszeichnen, dass ein entsprechendes Computerprogramm 12 darauf gespeichert ist. Das Steuerungsmodul 10 und/oder die Datenverarbeitungseinheit 11 können eine Bedieneinheit umfassen, die Eingabeelemente und Ausgabemittel, wie Tastaturen, Mäuse, Scanner, Drucker, Bildschirme und dergleichen bereitstellen kann, sowie eine Schnittstellensektion, die beliebige den jeweiligen Anforderungen entsprechende serielle oder parallele digitale Schnittstellen für Datensignale sowie Laufwerke für Speichermedien sowie selbige umfassen kann. Die Datenträgersignale 14 und/oder Speichermedien 15 können jeweils computerlesbare Datenträger darstellen.

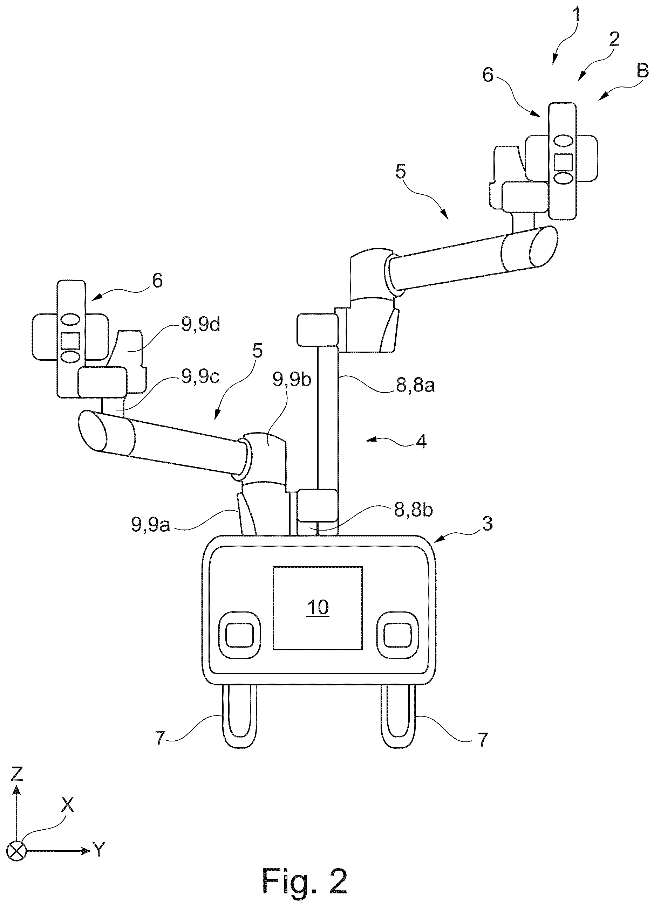

Fig. 2 zeigt eine schematische Vorderansicht eines Ausführungsbeispiels eines Robotersystems 1 mit einem Roboter 2 in einem weiteren Betriebszustand B. Im weiteren Betriebszustand B können die Vertikalführungen 8a, 8b die jeweilige an ihnen befestigte Basis 9a auf unterschiedliche Höhen in der Höhenrichtung Z bringen. Beispielsweise können sich die erste Vertikalführung 8a in einer oberen Position und die zweite Vertikalführung 8b in einer unteren Position befinden, womit die an den jeweiligen Basen 9a befestigten Roboterarme 5 beispielsweise daran gehaltene Endeffektoren 6 in unterschiedlichen Höhen bzw. Höhenbereichen einsetzen können.

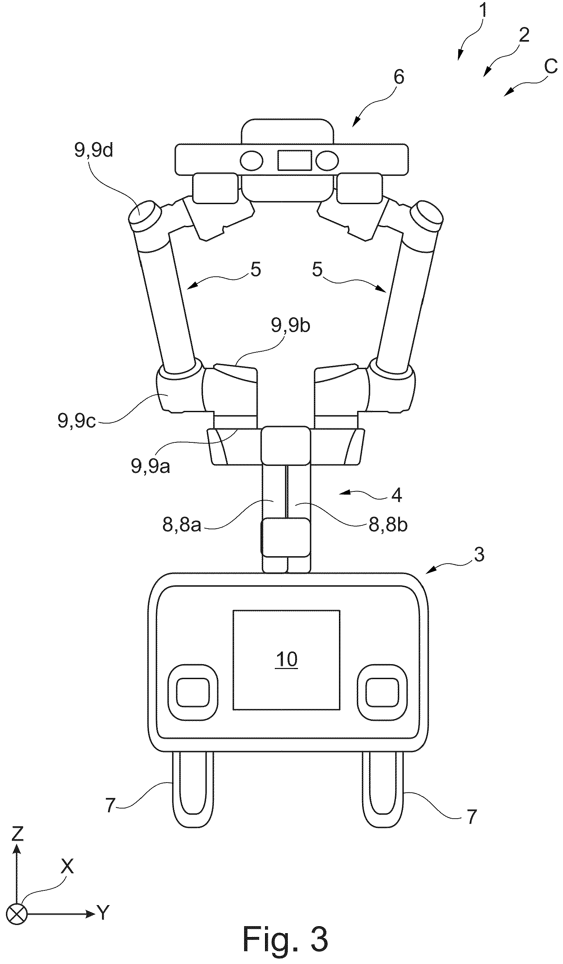

Fig. 3 zeigt eine schematische Vorderansicht eines Ausführungsbeispiels eines Robotersystems 1 mit einem Roboter 2 in einem zusätzlichen Betriebszustand C. Im zusätzlichen Betriebszustand können die Roboterarme 5 vom Sockelmodul 4 bzw. von der jeweiligen Vertikalführung 8a, 8b bewegungssynchron betrieben sein. Beispielsweise können die beiden Roboterarme 5 auf diese Weise einen einzigen besonders schweren Endeffektor 6 halten, der an einem der Roboterarme 5 allein nicht betreibbar wäre.

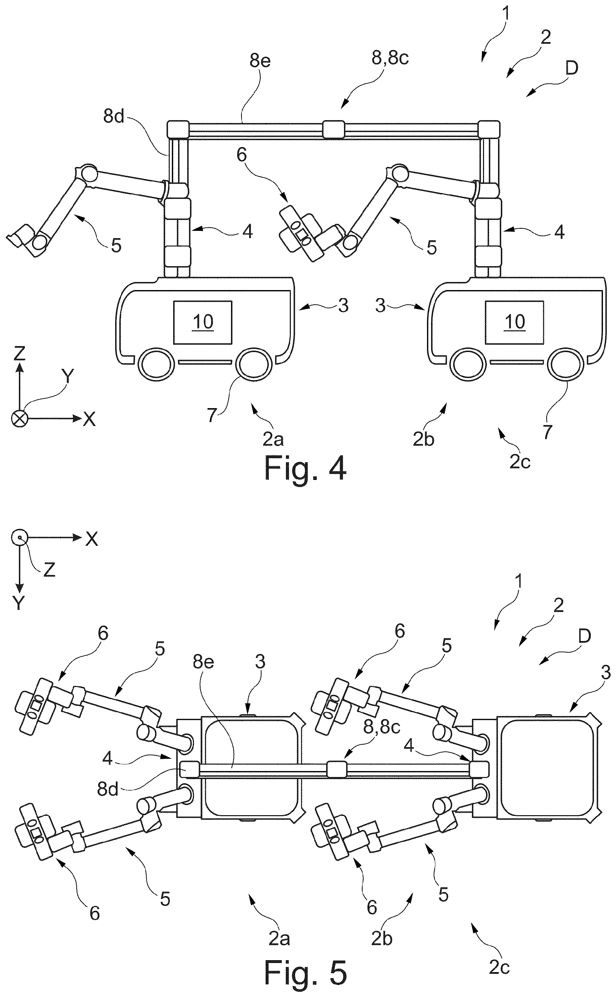

Fig. 4 zeigt eine schematische Seitenansicht eines Ausführungsbeispiels eines Robotersystems 1 mit zwei Robotern 2 in einem weiteren zusätzlichen Betriebszustand D. Die Roboter 2 können einen Arbeitsgruppenpiloten 2a und wenigstens ein weiteres Arbeitsgruppenmitglied 2b umfassen, die gemeinsam eine Arbeitsgruppe 2c von Robotern 2 bilden können. Die beiden Roboter 2 der Arbeitsgruppe 2c können über eine Verbindungsvorrichtung 8c mechanisch und/oder informationsübertragend miteinander verbunden sein. Die Verbindungsvorrichtung 8c kann als Sockelelement und somit als Teil des Sockelmoduls 4 ausgebildet bzw. damit verbindbar ausgestaltet sein. Beispielsweise kann die Verbindungsvorrichtung 8c Vertikal- und Horizontalabschnitte 8d, 8e umfassen, um die Roboter 2 miteinander zu verbinden.

Fig. 5 zeigt eine schematische Draufsicht eines Ausführungsbeispiels eines Robotersystems 1 mit zwei Robotern 2 im weiteren zusätzlichen Betriebszustand D. Hier ist ersichtlich, wie Vertikalabschnitte 8d der Verbindungsvorrichtung 8c vom Sockelmodul 4 aus vertikal nach oben weg ragen können. Von den Vertikalabschnitten 8d können sich die Horizontalabschnitte 8e im Wesentlichen horizontal weg erstrecken, um eine Verbindung zwischen den beiden Robotern 2 der Arbeitsgruppe 2c herzustellen. Beispielsweise können die Vertikalabschnitte 8d von den Horizontalabschnitten 8e weg- bzw. herunterklappbar ausgestaltet sein. Somit ist denkbar, dass die Verbindungsvorrichtung 8c zumindest teilweise in das Sockelmodul 4 integriert und/oder daran befestigbar ausgestaltet ist.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Robotersystem
- 2: Roboter
- 2a: Arbeitsgruppenpilot
- 2b: Arbeitsgruppenmitglied
- 2c: Arbeitsgruppe
- 3: Untersatz
- 4: Sockelmodul
- 5: Roboterarm
- 6: Endeffektor
- 7: Antriebseinrichtung
- 8: Sockelelement
- 8a: erste Vertikalführung
- 8b: zweite/weitere Vertikalführung
- 8c: Verbindungsvorrichtung
- 8d: Vertikalabschnitt
- 8e: Horizontalabschnitt
- 9: Armelement
- 9a: Basis
- 9b: Schulter
- 9c: Ellenbogen
- 9d: Handgelenk
- 10: Steuerungsmodul
- 11: Datenverarbeitungseinheit
- 12: Computerprogramm
- 13: Datenträgersignal
- 14: Speichermedium
- A: ersten Betriebszustand
- B: weiterer Betriebszustand
- C: zusätzlicher Betriebszustand
- D: weitere zusätzlicher Betriebszustand
- X: Längsrichtung
- Y: Querrichtung
- Z: Höhenrichtung

## Patentansprüche

1. Robotersystem (1) mit wenigstens einem Roboter (2) und wenigstens zwei Roboterarmen (5), die dazu eingerichtet sind, mit wenigstens einem Endeffektor (6) eine Arbeitsaufgabe auszuführen, wobei ein adaptives Sockelmodul (4) an einem Untersatz (3) des wenigstens einen Roboters (2) dazu eingerichtet ist, die wenigstens zwei Roboterarme (5) an ihrer jeweiligen Basis (9a) zu halten und wenigstens zwei verschiedene an die jeweilige Arbeitsaufgabe angepasste Betriebszustände (A, B, C, D) anzunehmen.

2. Robotersystem (1) nach Anspruch 1, **dadurch gekennzeichnet, dass** in mindestens einem Betriebszustand eine zumindest teilweise bewegungssynchrone Ausführung der Arbeitsaufgabe durch die wenigstens zwei Roboterarme (5) vorgesehen ist.

3. Robotersystem (1) nach Anspruch 1 oder 2, **dadurch gekennzeichnet, dass** die wenigstens zwei Roboterarme (5) an einem Roboter (2) und/oder an zwei verschiedenen Robotern (2) angeordnet sind.

4. Robotersystem (1) nach wenigstens einem der oben genannten Ansprüche, **dadurch gekennzeichnet, dass** wenigstens zwei Roboter (2) und/oder wenigstens zwei Roboterarme (5) dazu eingerichtet sind, über eine Verbindungsvorrichtung (8c) mechanisch miteinander gekoppelt zu werden.

5. Robotersystem (1) nach wenigstens einem der oben genannten Ansprüche, **dadurch gekennzeichnet, dass** das Sockelmodul (4) dazu eingerichtet ist, eine Geometrieveränderung zu vollziehen.

6. Robotersystem (1) nach wenigstens einem der oben genannten Ansprüche, **dadurch gekennzeichnet, dass** ein Sockelelement (8) und/oder ein Armelement (9) wenigstens eines Roboters (2) aus einer Arbeitsposition in eine Verbindungsposition überführbar ausgestaltet ist, wobei die Arbeitsposition zur Ausführung der Arbeitsaufgabe und die Verbindungsposition zur Herstellung einer Verbindung mit einem weiteren Roboter (2) vorgesehen ist.

7. Robotersystem (1) nach wenigstens einem der oben genannten Ansprüche, **dadurch gekennzeichnet, dass** wenigstens zwei Roboterarme (5) jeweils an einer höhenverstellbaren Vertikalführung (8a, 8b) des Sockelmoduls (8) gehalten sind.

8. Robotersystem (1) nach wenigstens einem der oben genannten Ansprüche, **dadurch gekennzeichnet, dass** wenigstens zwei Roboter (2) dazu eingerichtet sind, sich zu Erfüllung einer gemeinsamen Arbeitsaufgabe selbstständig miteinander zu synchronisieren.

9. Robotersystem (1) nach wenigstens einem der oben genannten Ansprüche, **dadurch gekennzeichnet, dass** von wenigstens zwei zu einer Arbeitsgruppe (2c) zusammengefassten Robotern (2) ein Roboter (2) als Arbeitsgruppenpilot (2a) dazu eingerichtet ist, die Arbeitsgruppe (2c) zu führen, während der verbleibende wenigstens eine Roboter der Arbeitsgruppe (2c) dazu eingerichtet ist, vom Arbeitsgruppenpilot (2a) geführt zu werden.

10. Verfahren zur Ausführung einer Arbeitsaufgabe mit einem Robotersystem (1) mit wenigstens einem Roboter (2) und wenigstens zwei Roboterarmen (5), wobei mit einem adaptiven Sockelmodul (4) an einem Untersatz (3) des wenigstens eines Roboters (2), das dazu eingerichtet ist, die wenigstens zwei Roboterarme (5) an ihrer jeweiligen Basis (9a) zu halten, wenigstens zwei verschiedene an die jeweilige Arbeitsaufgabe angepasste Betriebszustände (A, B, C, D) angenommen werden können.
